# DEMANDE DE BREVET EUROPEEN

(11) **EP 1 557 259 A1**
(43) Date de publication de la demande: **27.07.2005**
(21) Numéro de dépôt: 05290120.4
(22) Date de dépôt: 20.01.2005
(51) Int. Cl.: B32B 1/08, F16L 11/04, E03B 7/09

(54) **Tuyau souple en matière plastique multicouche**

(30) Priorité: 22.01.2004 FR 0400589
(71) Demandeur: Hozelock Tricoflex, 92500 Rueil Malmaison (FR)
(72) Inventeur: Carpentier, Fabien, 51300 Saint-Amand sur Fion (FR)
(74) Mandataire: Lavialle, Bruno

(57) **Abrégé**

Tuyau souple comportant un ensemble cohésif de trois couches coextrudées à savoir, de l'intérieur vers l'extérieur :
- une couche interne (1) comprenant un plastomère comportant un copolymère d'éthylène et d'une α-oléfine, le plastomère ayant une masse volumique inférieure à 0,900 g.cm⁻³.
- une couche intermédiaire d'un copolymère éthylène acétate de vinyle (2) présentant une polarité suffisante pour adhérer avec le plastomère et le polychlorure de vinyle souple,
- une couche externe (3) en polychlorure de vinyle souple.

## Description

La présente invention concerne un tuyau souple en matière plastique multicouche pour le transport de fluides destiné par exemple à être implanté dans des installations fixes ou mobiles de distribution d'eau potable.

Actuellement, les éléments destinés à être implantés dans les circuits de distribution d'eau potable, comme par exemple les canalisations, les robinets, les raccords, doivent recevoir une attestation de conformité à des normes sanitaires de deux niveaux. Dans le premier niveau, l'élément ne peut être utilisé que pour des applications dans lesquelles il n'est en contact avec l'eau potable transportée que pendant de courtes durées, éventuellement de façon répétée. Dans le deuxième niveau, l'élément peut être utilisé pour toute application de transport d'eau potable et en particulier pour celles où l'eau est en contact continûment avec l'élément.

Parmi les éléments conformes au second niveau, les canalisations ont pour la plupart une structure rigide. On connaît ainsi de telles canalisations qui sont réalisées en polyéthylène, en polypropylène ou en polychlorure de vinyle rigides spéciaux pour être inertes tant chimiquement que physiquement à l'égard de l'eau potable transportée. Ces canalisations sont de fabrication aisée et peu coûteuse de sorte que leur emploi est largement répandu dans les installations de distribution. Toutefois, la rigidité de ces canalisations en matière plastique introduit des limites quant à leur installation et leur entretien.

Il est toutefois connu du document FR-A-2794 212 un tuyau souple en matière plastique multicouche comportant, de l'intérieur vers l'extérieur une couche interne d'une polyoléfine inerte par rapport à l'eau, une couche de liaison ayant des propriétés d'adhésion envers la polyoléfine et le polychlorure de vinyle souple, une couche externe de polychlorure de vinyle souple, et une armature tubulaire au contact du polychlorure de vinyle. Bien que ce tuyau apporte une solution efficace ou une amélioration à la plupart des inconvénients ci-dessus mentionnés, sa souplesse peut s'avérer insuffisante pour certaines implantations, en particulier lorsque la température est inférieure à 0°C. Ainsi, un tel tuyau est inutilisable à une température inférieure à - 20°C, la polyoléfine étant cassante à cette température.

Selon l'invention, on prévoit, un tuyau souple comportant un ensemble cohésif de trois couches coextrudées à savoir, de l'intérieur vers l'extérieur :
- une couche interne comprenant un plastomère comportant un copolymère d'éthylène et d'une α-oléfine, le plastomère ayant une masse volumique inférieure à 0,900 g·cm⁻³ .
- une couche intermédiaire d'un copolymère éthylène acétate de vinyle présentant une polarité suffisante pour adhérer avec le plastomère et le polychlorure de vinyle souple,
- une couche externe en polychlorure de vinyle souple.

Le tuyau ainsi constitué est apte au transport de l'eau potable et présente une souplesse supérieure à celle du tuyau connu cité ci-dessus, qui facilite l'implantation du tuyau tout en conservant de relativement bonnes qualités mécaniques notamment en ce qui concerne la résistance à l'éclatement à l'égard de la pression régnant généralement dans les circuits auquel ce tuyau est destiné et la résistance aux sollicitations extérieures. Ce tuyau présente par ailleurs une bonne résistance aux solvants, ainsi qu'aux acides et bases forts, en particulier à des températures inférieures à 40°C environ.

Avantageusement, le plastomère est un copolymère d'éthylène et d'oct-1-ène

Ce groupe de plastomère s'avère particulièrement adaptée au transport de l'eau et présente des propriétés de souplesse et de résistance optimales.

Selon un mode de réalisation particulier, la couche externe de l'ensemble cohésif est recouverte d'une armature tubulaire et l'armature est située entre la couche externe de l'ensemble cohésif et une couche de recouvrement en polychlorure de vinyle.

La structure du tuyau selon ce mode de réalisation est particulièrement résistante.

Selon un autre mode de réalisation particulier, les couches ont des épaisseurs comprises entre :
- 0,1 mm à 4 mm environ pour la couche interne,
- 0,1 mm à 2 mm environ pour la couche de liaison,
- 0,5 mm à 4 mm environ pour la couche de polychlorure de vinyle.

Cette structure représente un compromis satisfaisant entre souplesse et résistance mécanique.

D'autres caractéristiques et avantages de l'invention ressortiront à la lecture de la description qui suit d'un mode de réalisation particulier non limitatif de l'invention.

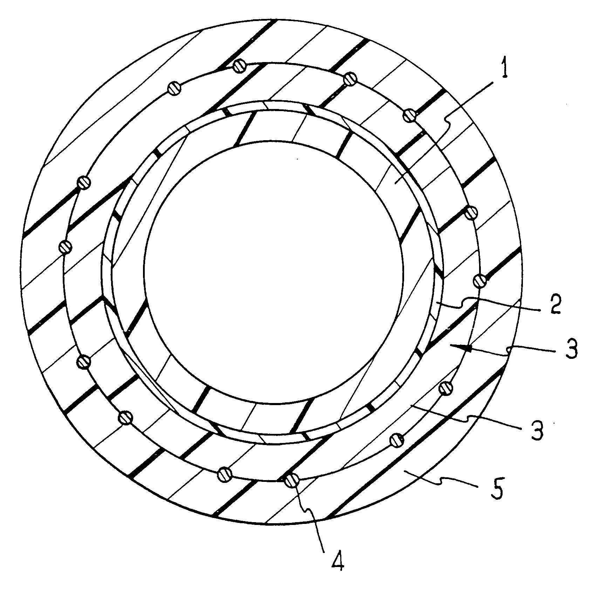

Il sera fait référence à la figure unique annexée représentant une vue en coupe transversale d'un tuyau conforme à l'invention.

En référence à la figure, le tuyau conforme à l'invention comprend un ensemble cohésif coextrudé comportant trois couches à savoir une couche interne 1, une couche intermédiaire 2 et une couche externe 3.

La couche interne 1 est réalisée en un plastomère, dont les caractéristiques sont compatibles avec le transport de l'eau et sont conformes aux normes sanitaires prévoyant que cette couche puisse être en contact de façon continue avec de l'eau stagnante. Le matériau employé est notamment inerte physiquement et chimiquement à l'égard de l'eau transportée pour ne pas entraîner une modification inacceptable de la composition des denrées ou une altération des propriétés organoleptiques de celle-ci. Le plastomère utilisé est ici composé de comonomères d'éthylène et de comonomères d'octène copolymérisé en utilisant un métallocène comme catalyseur pour former un copolymère d'oct-1-ène et d'éthylène. Ce plastomère est par exemple celui produit par la filiale commune ("joint-venture") DEXPLASTOMERS sous la référence EXACT 8201 Octene-1 Plastomer. Le copolymère obtenu présente une masse volumique inférieure à 0,900 g·cm⁻³ ici égale à 0,882 g·cm⁻³ environ avec une dureté voisine de 85 ShA selon la norme ISO 868.

La couche interne 1 comprend ici environ 100 % de ce copolymère. La couche interne 1 peut également être réalisée en un mélange de ce plastomère et de polyéthylène. La couche interne 1 peut en outre être réalisée en tout autre plastomère, par exemple un copolymère de butène ou d'hexène et de polyéthylène, agréé eau potable.

La couche interne 1 a une épaisseur comprise entre 0,1 mm et 4 mm. On notera que l'épaisseur de la couche interne influe peu sur la souplesse du tuyau. A titre d'exemple, pour un diamètre interne du tuyau de 12 mm, la couche interne a une épaisseur d'environ 0,5 mm.

La couche interne 1 est recouverte d'une couche intermédiaire 2 assurant la liaison de la couche interne 1 avec une couche externe 3 réalisée en polychlorure de vinyle recouvrant la couche intermédiaire 2.

La couche intermédiaire 2 est réalisée dans un matériau ayant une polarité suffisante pour obtenir une adhérence de la couche intermédiaire 2 sur le polyéthylène et le polychlorure de vinyle. En l'espèce, la couche intermédiaire 2 est réalisée à partir d'un copolymère éthylène - acétate de vinyle (EVA) qui permet d'obtenir une cohésion des couches 1 et 3. De préférence, la proportion d'acétate est relativement élevée pour favoriser l'adhérence des couches. Le copolymère utilisé est apte à un contact alimentaire. On utilisera par exemple le matériau référencé ELVAX 170 de la société DUPONT DE NEMOURS. Le choix du matériau de la couche intermédiaire 2 permet l'obtention d'un ensemble cohésif dont les trois couches présentent une adhérence entre elles d'au moins 20 daN.cm⁻¹ selon les normes NF EN 28033 ou ISO 6133. La couche intermédiaire 2 a une épaisseur comprise entre 0,1 mm et 2 mm, ici de l'ordre de 0,5 mm.

La couche externe 3 est réalisée en polychlorure de vinyle souple qui est ici apte à un contact alimentaire. La couche externe 3 a une épaisseur comprise entre 0,5 mm et 2 mm.

Une armature tubulaire 4 est disposée sur la couche externe 3 au contact du polychlorure de vinyle. L'armature tubulaire 4 est réalisée ici à base de polyester et plus précisément de fibres de polyéthylène téréphtalate (PET). Des fibres de polyamide ou de polypropylène pourraient également être utilisées.

Une couche de recouvrement 5 en polychlorure de vinyle souple s'étend sur l'armature tubulaire 4. Le polychlorure de vinyle souple est ici apte à un contact alimentaire et la couche de recouvrement 5 a une épaisseur comprise entre 0,5 mm et 2 mm.

Les matériaux utilisés sont de qualité alimentaire.

Le tuyau ainsi agencé présente, à -30°C, une flexibilité selon la norme NF EN 24672 méthode b et un rayon de courbure inférieur à 350 mm tout en conservant son intégrité, c'est-à-dire sans rupture des matériau constituant le tuyau.

Le tuyau ainsi réalisé est conforme à l'Arrêté du 29 mai 1997 relatif aux objets utilisés dans la distribution d'eau potable destinée à la consommation humaine.

Par ailleurs, on notera que ce tuyau possède des propriétés physico-chimiques le rendant résistant aux solvants et aux acides et bases forts à des températures inférieures à une quarantaine de degrés centigrades.

Le tuyau conforme à l'invention est réalisé selon la technique bien connue de coextrusion.

D'une manière générale, les épaisseurs des différentes couches sont déterminées de manière que le tuyau soit suffisamment souple et résistant et sont adaptées au diamètre interne du tuyau.

Bien entendu, l'invention n'est pas limitée au mode de réalisation décrit et on peut y apporter des variantes de réalisation sans sortir du cadre de l'invention tel que défini par les revendications.

## Revendications

1. Tuyau souple comportant un ensemble cohésif de trois couches coextrudées à savoir, de l'intérieur vers l'extérieur :
- une couche interne (1) comprenant un plastomère comportant un copolymère d'éthylène et d'une α-oléfine, le plastomère ayant une masse volumique inférieure à 0,900 g . cm⁻³ .
- une couche intermédiaire d'un copolymère éthylène acétate de vinyle (2) présentant une polarité suffisante pour adhérer avec le plastomère et le polychlorure de vinyle souple,
- une couche externe (3) en polychlorure de vinyle souple.

2. Tuyau selon la revendication 1, **caractérisé en ce que** la masse volumique du plastomère est d'environ 0,882 g·cm⁻³.

3. Tuyau selon la revendication 1, **caractérisé en ce que** le plastomère est un copolymère d'éthylène et d'oct-1-ène.

4. Tuyau selon la revendication 1, **caractérisé en ce que** la couche interne (1) comprend environ 100 % de copolymère d'éthylène et d'une α-oléfine.

5. Tuyau selon la revendication 1, **caractérisé en ce que** l'ensemble cohésif est agencé pour que les trois couches présentent une adhérence entre elles d'au moins 20 daN.cm⁻¹ selon les normes NF EN 28033 ou ISO 6133.

6. Tuyau selon la revendication 1, **caractérisé en ce que** la couche externe (3) de l'ensemble cohésif est recouverte d'une armature tubulaire (4).

7. Tuyau selon la revendication 6, **caractérisé en ce que** l'armature (4) est à base de polyester.

8. Tuyau selon la revendication 6, **caractérisé en ce que** l'armature (4) est à base de fibres de polyéthylène téréphtalate.

9. Tuyau selon l'une des revendications précédentes 6 à 8, **caractérisé en ce que** l'armature (4) est située entre la couche externe (3) de l'ensemble cohésif et une couche de recouvrement (5) en polychlorure de vinyle.

10. Tuyau selon l'une quelconque des revendications précédentes, **caractérisé en ce qu'**il est agencé pour présenter une flexibilité jusqu'à -30°C selon la norme NF EN 24672 méthode b.

11. Tuyau selon l'une quelconque des revendications précédentes, **caractérisé en ce qu'**il est agencé pour présenter un rayon de courbure inférieur à 350 mm à -30°C tout en conservant son intégrité.

12. Tuyau selon la revendication 1, **caractérisé en ce que** les matériaux sont de qualité alimentaire.

13. Tuyau selon l'une des revendications précédentes, **caractérisé en ce que** les couches ont des épaisseurs comprises entre :
- 0,1 mm à 4 mm environ pour la couche interne (1),
- 0, 1 mm à 2 mm environ pour la couche de liaison (2),
- 0,5 mm à 4 mm environ pour la couche de polychlorure de vinyle (3).
